# EUROPÄISCHE PATENTSCHRIFT

(11) **EP 0 841 490 B1**
(45) Veröffentlichungstag und Bekanntmachung des Hinweises auf die Patenterteilung: **10.10.2001**
(21) Anmeldenummer: 97119299.2
(22) Anmeldetag: 05.11.1997
(51) Int. Cl.: F16B 11/00, F16C 7/00

(54) **Vorrichtung zur Krafteinleitung**
Device for force introduction
Dispositif pour l'introduction de force

(30) Priorität: 05.11.1996 DE 19645467
(43) Veröffentlichungstag der Anmeldung: 13.05.1998
(73) Patentinhaber: Deutsches Zentrum für Luft- und Raumfahrt e.V., 53175 Bonn (DE)
(72) Erfinder: Schütze, Rainer, Dr., 38110 Braunschweig (DE)
(74) Vertreter: Einsel, Martin, Dipl.-Phys.

(56) Entgegenhaltungen:
- EP-A- 0 237 046
- DE-A- 3 408 650
- US-A- 4 895 351
- US-A- 5 056 950

## Beschreibung

Die Erfindung betrifft eine Vorrichtung zur Krafteinleitung mit einer Verbindung von zwei Elementen aus Werkstoffen, die sich nur unzureichend reibschlüssig verbinden lassen, also mit unterschiedlichem Wärmeausdehnungsverhalten, wobei die beiden Elemente zumindest in einem Verbindungsbereich einander nahe kommen und im Verbindungsbereich ein drittes Element zur Unterstützung der Verbindung vorgesehen ist.

Der Einbau von hochbelastbaren Krafteinleitungselementen in Faserverbundstrukturen stellt sich häufig als großes Problem dar. Die Krafteinleitungselemente sind meist metallisch, z. B. aus Aluminium. Werden wie üblich die Metallelemente in die Faserverbundstrukturen eingeklebt, entsteht ein Problem durch die Inkompatibilität der beiden Werkstoffe der miteinander verklebten Fügepartner. Diese besitzen nämlich ein unterschiedliches Wärmeausdehnungsverhalten; gerade eine solche inkompatible Werkstoffpaarung findet man in den Materialien kohlenstoffaserverstärkter Kunststoff und Aluminium. Diese beiden Werkstoffe nun gerade sind aufgrund ihrer hervorragenden gewichtsspezifischen Eigenschaften an sich für hochbelastbare Leichtbaustrukturen gut geeignet. Durch ihr unterschiedliches Wärmeausdehnungsverhalten und die dadurch entstehende Inkompatibilität sind solche Klebverbindungen nun aber kritisch, beispielsweise unter Dauerbelastungen oder dann, wenn von außen Wärmeeinwirkungen eintreten oder diese Wärmeeinwirkung durch die Belastung entsteht.

Aus der DE 34 08 650 A1 ist eine Vorrichtung zur Übertragung von Kräften zwischen metallischen Anschlußstücken und den Enden von rohr- bzw. stabförmigen Strukturelementen aus kohlenstoffaserverstärkten Kunststoffen bekannt. Das Strukturelement wird radial von einer Hülse umgeben, wobei radial zwischen der Hülse und dem Strukturelement ein Freiraum bleibt, der während der Herstellung mit einer speziellen Klebstoffmasse gefüllt wird, wobei der Kleber insbesondere auch CFK-Kurzschnittfasern enthalten kann. Als Kleber wird im übrigen ein Epoxidharz verwendet.

Dieser mit Klebstoffmasse zu füllende Freiraum ist zum Ende des Strukturelementes hin offen und erweitert sich auch konisch und stufenförmig. Die Hülse wird so nach außen gespreizt und gegen eine vom Ende her aufgesetzte Metallhülse gepresst.

Während diese bekannte Konzeption an sich die Kraftübertragung zwischen den beiden Elementen aus Metall bzw. Kunststoff verbessert, besteht jedoch die Gefahr, dass der hier wesentliche Klebstoff wegschert und die Verbindung leidet oder gar bricht. Dabei ist auch an den Effekt sich ändernder äußerer Bedingungen, insbesondere schwankender Temperaturen, zu denken. Der Klebstoff wird hier ja nicht als dünne Zwischenschicht wie sonst bei Klebeverbindungen, sondern als massives zusätzliches Element eingesetzt.

Aus der EP 0 186 624 B1 und der US-PS 4895351 ist eine weitere Konzeption bekannt. Hier werden ein Kunststoffrohr mit einem Innengewinde und ein metallisches Krafteinleitungselement mit einem Außengewinde versehen und beide ineinander geschraubt. Außen wird mit einer weiteren Metallhülse, die streng sitzt und eventuell gepresst wird, noch weiterer Druck auf die Schraubverbindung gegeben, um deren Reibschluss und Kraftschluss zu verbessern.

Diese Konstruktion ist recht kompliziert und kostspielig, darüber hinaus auch schwer. Außerdem verbessert sie nicht das grundlegende Problem der inkompatiblen Werkstoffe.

Aufgabe der Erfindung ist es demgegenüber, eine Vorrichtung zur Krafteinleitung in Faserverbundstrukturen gemäß dem Oberbegriff vorzuschlagen, die trotz der Verwendung dieser inkompatiblen Werkstoffe zu einer größeren Haltbarkeit bzw. Belastbarkeit führen.

Diese Aufgabe wird gelöst durch eine Vorrichtung zur Krafteinleitung mit einer Verbindung von zwei Elementen aus Werkstoffen, die sich nur unzureichend miteinander reibschlüssig verbinden lassen, also mit unterschiedlichem Wärmeausdehnungsverhalten, wobei die beiden Elemente zumindest in einem Verbindungsbereich einander nahe kommen, im Verbindungsbereich ein drittes Element zur Unterstützung der Verbindung vorgesehen ist, und wobei das erste Element und das zweite Element miteinander formschlüssig verbunden sind, das zweite Element und das dritte Element miteinander ebenfalls formschlüssig verbunden sind, und das erste Element und das dritte Element dagegen reibschlüssig, insbesondere stoffschlüssig (zum Beispiel als Klebverbindung), miteinander verbunden sind.

Insbesondere ist es bevorzugt, wenn das erste und das dritte Element jeweils aus einem faserverstärkten Kunststoff und das zweite Element aus einem Metall, insbesondere aus Aluminium, besteht.

Mit einer derartigen Konstruktion kann erreicht werden, dass die Krafteinleitung in Faserverbundstrukturen aus kohlenstoffaserverstärkten Kunststoffen, auch mittels beispielsweise nachträglich montierbarer metallischer Gewindeelemente aus etwa Aluminium erfolgen kann, ohne dass sich der grundsätzlich natürlich vorhandene Nachteil der Inkompatibilität der Werkstoffe der verwendeten Elemente ungünstig auswirkt.

Das erste Element ist dabei die eigentliche Faserverbundstruktur, das zweite Element das vorzugsweise metallische Element, über das von außen die Kraft in diese Faserverbundstruktur eingeführt werden soll.

Besonders bevorzugt ist es, wenn die reibschlüssige, insbesondere stoffschlüssige Verbindung des ersten und des dritten Elements eine Klebverbindung ist. Klebverbindungen sind erprobt, kostengünstig herzustellen und zuverlässig, gerade bei Faserverbundwerkstoffen. Hier handelt es sich außerdem um eine dünne Klebeverbindung zwischen zwei gut miteinander verbindbaren Bauteilen, so daß Abscherungen nicht zu befürchten sind.

Besonders effektiv und einfach im Aufbau wird es, wenn die verschiedenen Elemente sich mit ringförmigen Absätzen gegeneinander abstützen, insbesondere bei stab- oder rohrförmigen Verbindungen ist dieses sehr wirkungsvoll.

Es wird dann unter Zugbelastung ein innerer, ringförmiger Absatz des metallischen Elementes gegen einen entsprechenden Absatz des ersten Elementes, also der Faserverbundstruktur, gezogen. Unter Druckbelastung dagegen drückt ein äußerer Absatz des metallischen Elementes gegen die äußere Faserverbundstruktur.

Dabei ist gleichzeitig eine reibschlüssige Verbindung vorgesehen zwischen einer Faserverbundhülse und der Umgebungsstruktur, also dem dritten Element. Dieses besteht vorzugsweise aus dem gleichen Material wie die Faserverbundstruktur selbst, wodurch am einfachsten sichergestellt werden kann, daß beide Werkstoffe gleiches Wärmeausdehnungsverhalten besitzen und sie miteinander kompatibel sind. Die reibschlüssige Verbindung kann insbesondere durch den Spezialfall einer stoffschlüssigen Verbindung erfolgen. Im vorliegenden Fall bietet es sich an, die reibschlüssige Verbindung sicher durch Kleben vorzunehmen.

Die Hülse kann bei stabförmigen Strukturen sowohl von außen aufgeklebt werden oder aber sie befindet sich bei einer alternativen Ausführungsform formschlüssig eingefügt auf einem metallischen Gewindeelement, das mit der Hülle gemeinsam in die Faserverbundstruktur eingeklebt wird.

In bestimmten weiteren alternativen Ausführungsformen kann noch ein zusätzliches viertes Element, eine längere Hülse, verwendet werden. Dieses ist beispielsweise dann sinnvoll, wenn sich das Einkleben in die Struktur nicht kontrolliert durchführen läßt, etwa wegen Unzugänglichkeit der Klebefläche. Durch das vierte Element entsteht dann eine Verbindung, welche, bedingt durch ihre Konstruktion, mit einem entsprechenden Klebstoff kontrolliert, reproduzierbar und mit hoher Festigkeit erfolgen kann, indem die längere Hülse, das vierte Element, auf die bereits vorhandene kurze Hülse geklebt werden kann. Die grössere Überlappungslänge führt zu einer größeren Klebefläche und gleicht eine eventuell etwas schlechtere Qualität der Klebschicht wieder aus.

Als Faserverbundhülsen werden insbesondere geschlitzte Rohrelemente aus kohlenstoffaserverstärkten Kunststoffen mit vorzugsweise überwiegend unidirektionaler Faserausrichtung eingesetzt, wie sie beispielsweise aus der DE 44 19 691 C1 bekannt sind.

Als zusätzliche Maßnahme zur Verbesserung, insbesondere bei Innen-Krafteinleitungen hat es sich in Tests bereits bewährt, wenn um den Verbindungsbereich mit dem ersten Element, dem zweiten Element und dritten Element eine Ringwicklung gelegt wird. Diese äußere Ringwicklung erzielt eine höhere Festigkeit gegen Zug- und Druckkräfte, weil sie einem Ausweiten der stab- oder rohrförmigen Element entgegenwirkt und so die Beibehaltung des Formschlusses zusätzlich verstärkt und absichert.

Dabei ist es besonders bevorzugt, wenn die Ringwicklung eine Dicke von weniger als 0,2 mm, insbesondere von weniger als 0,1 mm aufweist. Diese geringe Dicke ist gewichts- und damit belastungsmäßig minimal, gleichzeitig wird bereits eine sehr effiziente Verhinderung des Ausweitens erzielt.

Es ist möglich, diese Ringwicklung in ringförmigen Nuten vorzusehen und so eine zusätzliche Verdickung nach außen des ganzen Aufbaus zu vermeiden. Es ist jedoch auch eine freie Ringwicklung sehr effektiv und nimmt die bei Zug auftretenden Umfangsspannungen auf.

Im folgenden werden anhand der Zeichnung einige Ausführungsbeispiele der Erfindung im einzelnen beschrieben. Es zeigen:
- Figur 1: einen Schnitt durch eine erste Ausführungsform der Erfindung;
- Figur 2: einen Schnitt durch eine zweite Ausführungsform der Erfindung; und
- Figur 3: einen Schnitt durch eine dritte Ausführungsform der Erfindung.

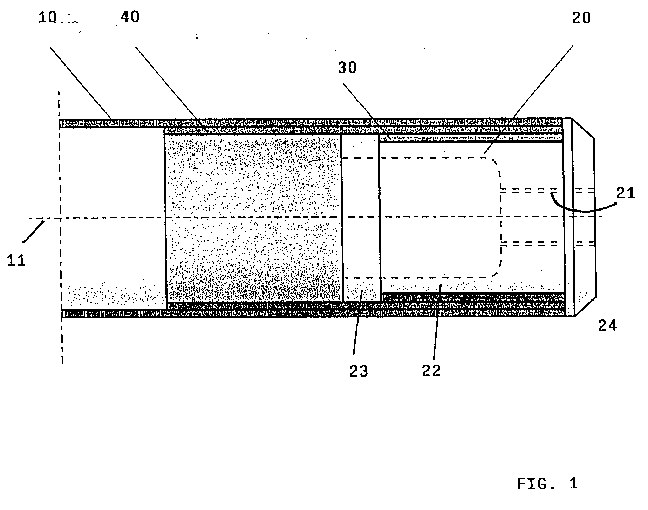

**Figur 1** zeigt eine erste Ausführungsform, nämlich einen Faserverbundstab mit einem Innenanschluß für eine Krafteinleitung.

Zu erkennen ist ein erstes Element 10, hier eine stabförmige Faserverbundstruktur aus einem kohlefaserverstärkten Kunststoff. Diese ist zylindrisch, die Mittelachse 11 ist auch die Mittelachse der weiteren Bauelemente. Das erste Element 10 kann sich außerhalb der Zeichnungen noch weit nach links erstrekken.

An dieses erste Element soll nun ein zweites Element 20 so angeschlossen werden, daß eine Krafteinleitung möglich ist. Das zweite Element 20 besteht hier aus Aluminium und besitzt ein Innengewinde 21, in das von außen dann nicht dargestellte Einrichtungen eingreifen, die die Kraft ausüben. Die Mittelachse 11 gilt auch für das Innengewinde 21 und das zweite Element 20.

Das zweite Element 20 besitzt außerdem ein zylindrisches Mittelteil 22, einen ringförmigen Absatz 23, der das Element nach links in der Zeichnung abschließt, etwa in Form eines Kragens, sowie einen weiteren ringförmigen Absatz 24, der auf der anderen Seite des zylindrischen Mittelteils 22 angeordnet ist und diesen ebenfalls nach außen radial überragt.

Um das zylindrische Mittelteil 22 herum ist das dritte Element 30 angeordnet. Dieses Element 30 ist eine Hülse, die relativ kurz ist und ebenfalls aus einem kohlenstoffaserverstärkten Kunststoff besteht, durchaus aus dem gleichen Material wie das erste Element 10. Die Hülse ist geschlitzt und entspricht beispielsweise Hülsen aus der DE-44 19 691 C1. Sie paßt in dem dargestellten Ausführungsbeispiel genau zwischen die beiden ringförmigen Absätze 23 und 24 um das zylindrische Mittelteil 22 des zweiten Elementes 20. Es wäre auch möglich, die Hülse 30 nur gegen den Absatz 23 stoßen zu lassen und zwischen Hülse 30 und dem Absatz 24 ein Spiel zuzulassen. Zuvor ist es sinnvoll, den Raum möglichst auszunutzen, um eine möglichst große Klebefläche zwischen der Hülse 30 und dem Element 10 bereitzustellen, zur vollständigen Funktionsfähigkeit der Krafteinleitung ist dies jedoch nicht erforderlich.

Die Hülse kann beispielsweise aus Handhabungsgründen mit dem zylindrischen Teil des zweiten Elementes 20 verklebt sein, notwendig ist dies allerdings nicht. Die Wanddicke der Hülse bzw. des dritten Elementes 30 entspricht der Absatzhöhe des in der Darstellung linken Absatzes 23; der ringförmige Absatz 23 und das dritte Element 30 bilden also eine gemeinsame Außenseite ohne Sprung. Das dritte Element 30 ist in der dargestellten Ausführungsform zwischen den beiden Absätzen 23 und 24 unverrückbar eingefügt, wenn es herumgelegt und in geeigneter Weise der Schlitz verschlossen ist.

In dem dargestellten Ausführungsbeispiel ist ein viertes Element 40 vorgesehen, wiederum eine Hülse, diesmal mit etwas längerer Achslänge, gefertigt aus kohlenstofffaserverstärktem Kunststoff, durchaus mit wiederum ähnlichen Spezifikationen wie die Elemente 10 und 30. Dieses vierte Element 40 wird auf seiner Außenseite mit der Innenseite des ersten stabförmigen Elementes 10 und mit seiner Innenseite mit der Außenseite des dritten Elementes 30 jeweils verklebt. Die Reihenfolge der Verklebungen kann dabei konstruktionstechnisch möglichst zweckmäßig gewählt werden. Gerade für diese Ausführungsform relevant ist dabei, daß das Ende der Hülse des vierten Elementes 40 mit dem Ende der Faserverbundstruktur des Elementes 10 abschließt und ebensolches auch für das dritte Element 30 gilt.

Um ein Spiel zwischen dem metallischen Element 20 und dem ersten Element 10 zu vermeiden, muß darauf geachtet werden, daß die Hülse des dritten Elementes 30 direkten Kontakt mit dem inneren Absatz 23 des metallischen Elementes 20 hat.

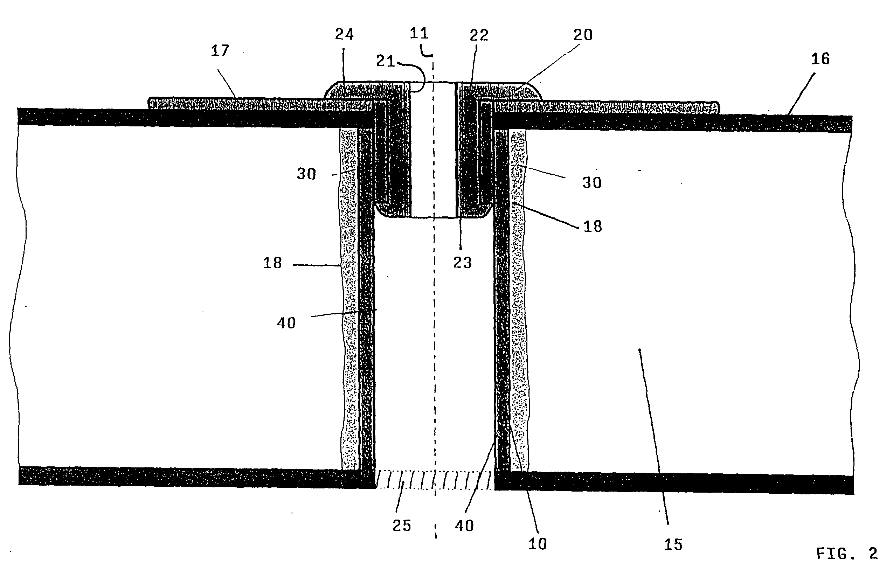

Die **Figur 2** zeigt eine Krafteinleitung in eine Sandwich-Platte, die hier das erste Element 10 bildet. Diese Sandwich-Platte 10 besitzt hier einen geschäumten Kern 15 und eine Deckschicht 16. Die Sandwich-Platte, also das Element 10, ist hier durchbohrt worden. Dabei ist die Deckschicht 16 definiert und sauber mit einem bestimmten Durchmesser durchbohrt worden. Im Sandwich-Kern 15 wird mit einem Zylinderfräser (nicht dargestellt) eine Aussparung erzeugt, deren Durchmesser größer ist als die Bohrung in der Deckschicht 16.

Zur Krafteinleitung wird wiederum ein metallisches Element 20 eingesetzt, hier ein Gewindeelement mit zylindrischem Mittelteil 22 und zwei äußeren Absätzen 23 und 24. Der Absatz 23 ragt in die Bohrung, der ringförmige Absatz 24 übergreift die Deckschicht 16 und liegt auf dieser unter Zwischenfügung einer zur Verstärkung des ersten Elementes 10 in diesem Bereich mit seiner Deckschicht 16 vorgesehenen lokalen Verstärkung 17.

Ein drittes Element 30 besteht hier wiederum in einer relativ kurzen Hülse, die genau zwischen die beiden ringförmigen Absätze 23 und 24 paßt und aus kohlenstoffaserverstärktem Kunststoff besteht. Wesentlich ist wiederum der direkte Kontakt zwischen dem Element 30 und dem Absatz 23. Auch hier ist ein viertes Element 40 wie bei der ersten Ausführungsform vorgesehen, auch hier handelt es sich wieder um eine relativ lange Hülse aus kohlenstoffaserverstärktem Kunststoff. Die lange Hülse bzw. das vierte Element 40 entspricht in ihrer Länge der Dicke des Sandwich-Kerns 15.

Die Größe der Bohrung in der Deckschicht 16 wird so gewählt, daß der zylindrische Mittelteil 22 des metallischen Elementes 20 mit der in ihn eingefügten kurzen Faserverbundhülse des dritten Elementes 30 durchgesteckt werden kann.

Die lange Hülse bzw. das vierte Element 40 liegt bei fertiger Verbindungsvorrichtung über der kurzen und stößt daher von innen gegen beide Deckschichten 16 des ersten Elementes 10.

Zur Montage des vierten Elementes 40 wird zunächst die Ausfräsung im Sandwich-Kern 15 am Rand mit einer Klebstoffüllmasse 18 versehen. Sofort danach wird die lange, geschlitzte, etwas zusammengerollte Hülse des Elementes 40 durch die Deckschichtbohrung geschoben. Während des Einklebens des zweiten Elementes, des Aluminiumgewindes, wird dieses vierte Element 40 in die Füllmasse 18 gedrückt. Das Einkleben des zweiten Elementes kann sowohl einseitig wie auch von beiden Deckschichten 16 aus erfolgen.

Es ist auch möglich, in diesem Fall von beiden Deckschichten 16 aus jeweils ein zweites Element 20 der vorbeschriebenen Form in die Bohrung einzuschieben, was durch das gestrichelte Feld 25 angedeutet ist.

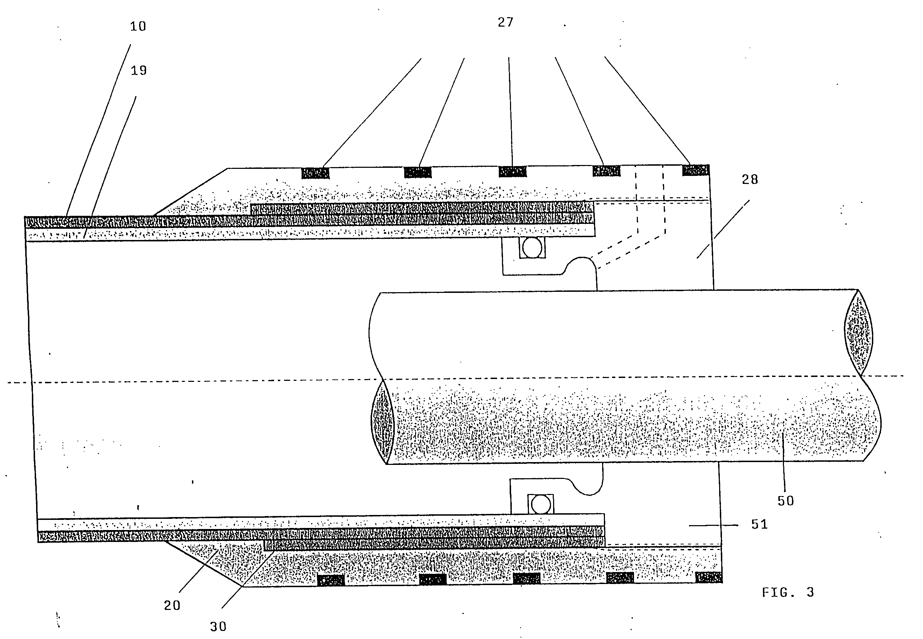

In der **Figur 3** ist eine weitere Möglichkeit einer Ausführungsform angedeutet. Hierzu sei zunächst erwähnt, daß die beiden in den ersten Ausführungsformen erwähnten Möglichkeiten der Krafteinleitung jeweils ein Element 20 mit einem Gewinde vorsehen, das aus einem metallischen Werkstoff besteht und in ein Faserverbundrohr (Figur 1) bzw. in eine zylindrische Ausfräsung (Figur 2) eingeklebt wird.

Die kurze, geschlitzte Faserverbundhülse, jeweils das Element 30, läßt sich jedoch auch außen auf das Ende eines Stabes kleben. Zur Kraftüberleitung wird dann ein Element 20, beispielsweise wiederum ein Aluminiumelement mit einem Gewinde, benötigt, das den Stab in Form einer Überwurfmutter umgreift und mit einem inneren Absatz gegen die außen aufgeklebte Faserverbundhülse drückt. In diesem Fall erübrigt sich die Verwendung einer zweiten äußeren Hülse, da bereits die erste kontrolliert und reproduzierbar mit dem Stab verklebt werden kann.

In Figur 3 ist diese Möglichkeit anhand einer Ausführungsform mit einem Hydraulikzylinder dargestellt. Dieser Hydraulikzylinder besteht wie beispielsweise in der EP 0 701 065 A2 vorgeschlagen, in seinem Inneren aus einem mit Fasern umwickelten Stahl-Liner, wobei dieser Stahl-Liner in ein Faserverbundrohr mit überwiegender unidirektionaler Orientierung der Fasern gesteckt ist.

Dieses Faserverbundrohr stellt hier das Element 10 dar; der innere Einschub ist in der Figur 3 mit dem Bezugszeichen 19 versehen.

Das Element 10 kann hier von außen kontrolliert und reproduzierbar mit einer geschlitzten Hülse aus kohlenstoffaserverstärktem Kunststoff mit unidirektional orientierten Fasern verklebt werden, die hier wiederum das Element 30 darstellen.

Das Element 30 stößt hier mit seiner einen Stirnseite gegen eine innen abgestufte entsprechende Kante eines zweiten Elementes 20, das hier wiederum ein Aluminiumrohr darstellt, hier beispielsweise mit einer Ringwicklung 27 aus kohlenstoffaserverstärktem Kunststoff umgeben ist. Dieses Aluminiumrohr kann von der anderen, aus dem Bild links herausführenden Seite aus über das schon aufgeklebte Element 30 geschoben werden und umgibt dieses dann formschlüssig. Durch den Absatz ist es möglich, hohe Zugkräfte über das Rohr des zweiten Elementes 20 in das erste Element 10 einzuleiten.

Auf der anderen Seite des dritten Elementes 30, also auf der gegenüberliegenden Stirnseite (in Figur 3 auf der rechten Bildseite) ist ein metallischer Deckel vorgesehen, der entweder eine Befestigungsmöglichkeit oder aber eine Durchführung für eine Kolbenstange 50 besitzt. Der metallische Deckel 28, beispielsweise aus Aluminium, wird mit dem zweiten Element 20 verschraubt. Er ist damit im Sinne der Erfindung als Teil des zweiten Elementes 20 anzusehen.

Die Ringwicklung 27 besteht aus endlosen Fasern, die in ringförmigen Nuten verlaufen. Sie geben eine zusätzliche Ringsteifigkeit.

Die Achse 11 des ersten Elementes 10 ist auch hier zugleich die Achse der Kolbenstange 50.

In einer nicht dargestellten weiteren Ausführungsform kann aus der Figur 3 leicht eine weitere Möglichkeit erkannt werden. Die dort dargestellte Konstruktion kann nämlich für einen weiteren Stabanschluß genutzt werden. Bei hochbelasteten Zugstäben aus kunststoffaserverstärkten Kunststoffen mit relativ kleinen Durchmessern tritt das Problem auf, daß deren Zugfestigkeit deutlich grösser ist als die aller verfügbaren Schrauben, die in den Stab eingeschraubt werden können. Krafteinleitungen, die in Form einer Überwurfmutter den Stab umgreifen, erlauben dagegen wesentlich größere Schraubendurchmesser und führen damit dann zu einer besseren Nutzung der Fasern und ihrer physikalischen Möglichkeiten.

### Bezugszeichenliste

- 10: erstes Element
- 11: Achse
- 15: Sandwich-Kern
- 16: Deckschicht
- 17: lokale Verstärkung
- 18: Klebstoffüllmasse
- 19: Stahl-Liner
- 20: zweites Element
- 21: Gewinde
- 22: zylindrisches Mittelteil
- 23: ringförmiger Absatz
- 24: ringförmiger Absatz
- 25: Feld
- 27: Ringwicklung
- 28: Deckel
- 30: drittes Element
- 40: viertes Element
- 50: Kolbenstange
- 51: Deckel

## Patentansprüche

1. Vorrichtung zur Krafteinleitung mit einer Verbindung von zwei Elementen (10, 20) aus Werkstoffen, die sich nur unzureichend miteinander reibschlüssig verbinden lassen, also mit unterschiedlichem Wärmeausdehnungsverhalten, wobei die beiden Elemente (10, 20) zumindest in einem Verbindungsbereich einander nahe kommen, im Verbindungsbereich ein drittes Element (30) zur Unterstützung der Verbindung vorgesehen ist,
**dadurch gekennzeichnet,**
**dass** das erste Element (10) und das zweite Element (20) miteinander formschlüssig verbunden sind,
**dass** das zweite Element (20) und das dritte Element (30) miteinander ebenfalls formschlüssig verbunden sind, und
**dass** das erste Element (10) und das dritte Element (30) dagegen reibschlüssig, insbesondere stoffschlüssig wie zum Beispiel als Klebverbindung, miteinander verbunden sind.

2. Vorrichtung nach Anspruch 1,
**dadurch gekennzeichnet,**
**dass** das erste Element (10) und das dritte Element (30) jeweils aus einem kohlenstoffaserverstärkten Kunststoff und das zweite Element (20) aus einem Metall, insbesondere aus Aluminium, besteht.

3. Vorrichtung nach Anspruch 1 oder 2,
**dadurch gekennzeichnet,**
**dass** die reibschlüssige, insbesondere stoffschlüssige Verbindung des ersten Elements (10) und des dritten Elements (30) eine Klebeverbindung ist.

4. Vorrichtung nach einem der vorhergehenden Ansprüche,
**dadurch gekennzeichnet,**
**dass** das zweite Element (20) aus dem vorzugsweise metallischen Werkstoff ein Gewinde (21) zur Kraftübertragung trägt.

5. Vorrichtung nach einem der vorstehenden Ansprüche,
**dadurch gekennzeichnet,**
**dass** die Elemente (10, 20, 30) im wesentlichen koaxiale Rohre aus verschiedenen Werkstoffen mit aneinander formschlüssig angreifenden Absätzen (23, 24) sind.

6. Vorrichtung nach Anspruch 5,
**dadurch gekennzeichnet,**
**dass** das dritte Element (30) eine Hülse ist, die die rohrförmige Struktur des Verbindungsbereiches des ersten (10) und des zweiten Elementes (20) umgibt.

7. Vorrichtung nach Anspruch 6,
**dadurch gekennzeichnet,**
**dass** die Hülse ein geschlitztes Rohrelement aus einem kohlenstoffaserverstärkten Kunststoff ist, vorzugsweise mit überwiegend unidirektionaler Faserausrichtung.

8. Vorrichtung nach einem der vorstehenden Ansprüche,
**dadurch gekennzeichnet,**
**dass** die Krafteinleitung in eine stabförmige Faserverbundstruktur durch ein in der stabförmigen Faserverbundstruktur angeordnetes Gewindeelement (21) erfolgt,
**dass** das Gewindeelement das zweite Element (20) aus dem vorzugsweise metallischen Werkstoff ist,
**dass** es ein im wesentlichen zylindrisches Mittelteil (22) und ringförmige, nach außen vorspringende Absätze an den Enden aufweist, und das dritte Element (30) eine geschlitzte Hülse ist, die zwischen die ringförmigen Absätze (23, 24) eingefügt und mit dem ersten Element (10), einer ringförmigen außenliegenden Hülse, reibschlüssig verbunden, insbesondere verklebt ist.

9. Vorrichtung nach einem der vorstehenden Ansprüche,
**dadurch gekennzeichnet,**
**dass** zwischen dem ersten (10) und dem dritten Element (30) ein viertes Element (40) vorgesehen ist, das aus einem mit dem ersten (10) und dritten Element (30) kompatiblen Werkstoff besteht und reibschlüssig mit diesen verbunden ist.

10. Vorrichtung nach einem der vorstehenden Ansprüche,
**dadurch gekennzeichnet,**
**dass** das erste Element (10), die Faserverbundstruktur, von dem zweiten Element (20) aus dem vorzugsweise metallischen Werkstoff in Form einer Überwurfmutter umgriffen wird, wobei das dritte Element (30) als Hülse auf dem ersten Element (10) reibschlüssig angeordnet ist und eine Stirnseite aufweist, die innen gegen eine abgestufte Anstoßfläche der Überwurfmutter stößt, wobei das zweite Element (20) aus dem vorzugsweise metallischen Werkstoff durch eine Abschlußsicherung auf dem Stabende gehalten wird.

11. Vorrichtung nach Anspruch 10,
**dadurch gekennzeichnet,**
**dass** das erste Element (10) zusätzlich mit einem Stahl-Liner (19) im Inneren verstärkt ist und einen Hydraulikzylinder bildet, und
**dass** die Sicherung ein metallischer oder metallverstärkter Deckel (51) ist, der eine Befestigungsmöglichkeit oder aber eine Durchführung für eine Kolbenstange (50) aufweist und mit dem zweiten Element (20) verschraubt ist.

12. Vorrichtung nach einem der vorstehenden Ansprüche,
**dadurch gekennzeichnet,**
**dass** um den Verbindungsbereich mit dem ersten Element (10), dem zweiten Element (20) und dritten Element (30) eine Ringwicklung gelegt wird.

13. Vorrichtung nach Anspruch 12,
**dadurch gekennzeichnet,**
**dass** die Ringwicklung eine Dicke von weniger als 0,2 mm, insbesondere von weniger als 0,1 mm aufweist.

14. Vorrichtung nach einem der vorstehenden Ansprüche,
**dadurch gekennzeichnet,**
**dass** das erste Element (10) eine Sandwich-Platte ist,
**dass** das zweite Element (20) ein metallisches Element mit einem Innengewinde (21) ist, und
**dass** das dritte Element (30) eine zwischen zwei ringförmige Absätze (23, 24) auf dem zweiten (Gewinde-) element (20) außen eingefügte kurze Hülse aus dem zum ersten Element (10) kompatiblen Werkstoff besteht.

## Claims

1. A device for introducing force including a joint between two elements (10, 20) consisting of materials which are only inadequately connectable by frictional engagement i.e. materials having differing properties of thermal expansion, whereby the two elements (10, 20) come close to one another in at least one connecting region and a third element (30) for supporting the joint is provided in said connecting region,
**characterised**
**in that** the first element (10) and the second element (20) are connected together in snug-fitting manner,
**in that** the second element (20) and the third element (30) are also connected together in snug-fitting manner, and
**in that**, by contrast, the first element (10) and the third element (30) are connected together by frictional engagement and in particular, by means of a material joint such as an adhesive joint for example.

2. A device in accordance with Claim 1,
**characterised**
**in that** the first element (10) and the third element (30) each consist of a carbon fibre reinforced synthetic material, and the second element (20) consists of a metal and in particular, of aluminium.

3. A device in accordance with Claim 1 or 2,
**characterised**
**in that** the frictional and in particular, the material joint between the first element (10) and the third element (30) is an adhesive joint.

4. A device in accordance with any of the preceding Claims,
**characterised**
**in that** the second element (20) preferably consisting of a metallic material comprises a thread (21) for transmitting forces.

5. A device in accordance with any of the preceding Claims,
**characterised**
**in that** the elements (10, 20, 30) are substantially co-axial tubes of differing materials incorporating shoulders (23, 24) which engage with one another in snug-fitting manner.

6. A device in accordance with Claim 5,
**characterised**
**in that** the third element (30) is a sleeve which surrounds the tubular structure of the connecting region between the first (10) and the second element (20).

7. A device in accordance with Claim 6,
**characterised**
**in that** the sleeve is a slit tubular element consisting of a carbon fibre reinforced synthetic material wherein the alignment of the fibres is preferably mainly unidirectional.

8. A device in accordance with any of the preceding Claims,
**characterised**
**in that** the introduction of force into a rod-shaped fibre reinforced structure is effected by means of a threaded element (21) arranged in the rod-shaped fibre reinforced structure,
**in that** the threaded element is the second element (20) that preferably consists of the metallic material,
**in that** it comprises a substantially cylindrical middle section (22) having outwardly projecting annular shoulders at the ends thereof, and the third element (30) is a slit sleeve which is inserted between the annular shoulders (23, 24) and is connected to the first element (10), an outwardly located annular sleeve, by frictional engagement and in particular, it is adhered thereto.

9. A device in accordance with any of the preceding Claims,
**characterised**
**in that** a fourth element (40) is provided between the first (10) and the third element (30), said fourth element (40) consisting of a material which is compatible with the first (10) and the third element (30) and is connected thereto by frictional engagement.

10. A device in accordance with any of the preceding Claims,
**characterised**
**in that** the first element (10), the fibre reinforced structure, is surrounded by the second element (20), which preferably consists of the metallic material, in the form of a retaining nut, whereby the third element (30) in the form of a sleeve is arranged on the first element (10) in frictionally engaged manner and comprises an end face which engages inwardly against a stepped bearing face of the retaining nut, whereby the second element (20) that preferably consists of the metallic material is held on the end of the rod by a closure securing member.

11. A device in accordance with Claim 10,
**characterised**
**in that** the interior of the first element (10) is additionally reinforced with a steel liner (19) and forms a hydraulic cylinder, and
**in that** the securing member is a metallic or metal reinforced cover (51) which is screwed to the second element (20) and comprises an attachment means or else a guideway for a piston rod (50).

12. A device in accordance with any of the preceding Claims,
**characterised**
**in that** a ring winding is laid around the connecting region including the first element (10), the second element (20) and the third element (30).

13. A device in accordance with Claim 12,
**characterised**
**in that** the ring winding has a thickness of less than 0.2 mm, and in particular, of less than 0.1 mm.

14. A device in accordance with any of the preceding Claims,
**characterised**
**in that** the first element (10) is a sandwich plate,
**in that** the second element (20) is a metallic element having an internal thread (21), and
**in that** the third element (30) consists of a short sleeve of material that is compatible with the first element (10), whereby said third element is inserted externally between two annular shoulders (23, 24) on the second (threaded) element (20).

## Revendications

1. Dispositif pour la transmission d'efforts avec une liaison de deux éléments (10, 20) réalisés dans des matériaux qui ne peuvent être reliés qu'incomplètement pour assurer un entraînement par friction, donc ayant des coefficients de dilatation différents, les deux éléments (10, 20) se rapprochant au moins dans une zone de liaison et un troisième élément (30) étant prévu dans la zone de liaison pour renforcer la liaison, **caractérisé en ce que**
le premier élément (10) et le deuxième élément (20) sont reliés entre eux en complémentarité de forme,
**en ce que** le deuxième élément (20) et le troisième élément (30) sont reliés entre eux également en complémentarité de forme
et **en ce que** le premier élément (10) et le troisième élément (30) sont par contre reliés entre eux en assurant un entraînement par friction, en particulier en complémentarité de matière, par exemple comme liaison collée.

2. Dispositif selon la revendication 1, **caractérisé en ce que** le premier élément (10) et le troisième élément (30) se composent respectivement d'une matière synthétique renforcée de fibres de carbone et le deuxième élément (20) de métal, en particulier d'aluminium.

3. Dispositif selon la revendication 1 ou 2, **caractérisé en ce que** la liaison assurant un entraînement par friction, en particulier en complémentarité de matière, du premier élément (10) et du troisième élément (30) est une liaison collée.

4. Dispositif selon l'une des revendications précédentes, **caractérisé en ce que** le deuxième élément (20) réalisé dans le matériau de préférence métallique est muni d'un filetage (21) pour la transmission des efforts.

5. Dispositif selon l'une des revendications précédentes, **caractérisé en ce que** les éléments (10, 20, 30) sont essentiellement des tubes coaxiaux en différents matériaux avec des épaulements (23, 24) qui sont en prise réciproque en épousant leurs formes respectives.

6. Dispositif selon la revendication 5, **caractérisé en ce que** le troisième élément (30) est une douille qui entoure la structure tubulaire de la zone de liaison du premier élément (10) et du deuxième élément (20).

7. Dispositif selon la revendication 6, **caractérisé en ce que** la douille est un élément de tube fendu en matériau synthétique renforcé de fibres de carbone, de préférence avec un alignement principalement unidirectionnel des fibres.

8. Dispositif selon l'une des revendications précédentes, **caractérisé en ce que**
la transmission des efforts dans une structure composite en fibres en forme de barre a lieu par un élément de filetage (21) disposé dans la structure composite en fibres en forme de barre,
**en ce que** l'élément de filetage est le deuxième élément (20) réalisé dans le matériau de préférence métallique,
**en ce qu'**il comprend une partie centrale (22) sensiblement cylindrique et aux extrémités des épaulements circulaires s'avançant vers l'extérieur et **en ce que** le troisième élément (30) est une douille fendue qui est introduite entre les épaulements circulaires (23, 24) et qui est reliée, en particulier par collage, en assurant un entraînement par friction, avec le premier élément (10), qui est une douille circulaire se trouvant à l'extérieur.

9. Dispositif selon l'une des revendications précédentes, **caractérisé en ce**
**qu'**entre le premier élément (10) et le troisième élément (30) est prévu un quatrième élément (40) se composant d'un matériau compatible avec le premier élément (10) et le troisième élément (30) et qui est relié à ceux-ci en assurant un entraînement par friction.

10. Dispositif selon l'une des revendications précédentes, **caractérisé en ce que**
le premier élément (10), la structure composite en fibres, est entouré par le deuxième élément (20) réalisé dans le matériau de préférence métallique et ayant la forme d'un écrou d'accouplement, le troisième élément (30) étant disposé en tant que douille sur le premier élément (10) en assurant un entraînement par friction et comprenant un côté frontal qui s'appuie à l'intérieur contre une surface de butée étagée de l'écrou d'accouplement, le deuxième élément (20) réalisé dans le matériau de préférence métallique étant maintenu sur l'extrémité de la barre par un arrêt d'obturation.

11. Dispositif selon la revendication 10, **caractérisé en ce que**
le premier élément (10) est en outre renforcé à l'intérieur par un fourreau en acier (19) et forme un vérin hydraulique
et **en ce que** l'arrêt est un couvercle métallique ou renforcé par du métal (51), qui constitue une possibilité de fixation ou un passage pour une tige de piston (50) et qui est vissé sur le deuxième élément (20).

12. Dispositif selon l'une des revendications précédentes, **caractérisé en ce qu'**un enroulement circulaire est posé autour de la zone de liaison avec le premier élément (10), le deuxième élément (20) et le troisième élément (30).

13. Dispositif selon la revendication 12, **caractérisé en ce que** l'enroulement circulaire a une épaisseur de moins de 0,2 mm, en particulier de moins de 0,1 mm.

14. Dispositif selon l'une des revendications précédentes, **caractérisé en ce que**
le premier élément (10) est une plaque en sandwich, **en ce que** le deuxième élément (20) est un élément métallique comportant un filetage intérieur (21) et **en ce que**
le troisième élément (30) est une courte douille réalisée dans le matériau compatible avec le premier élément (10) et placée à l'extérieur du deuxième élément (à filetage) (20) entre deux épaulements circulaires (23, 24).
